# EUROPEAN PATENT APPLICATION

(11) **EP 4 083 786 A1**
(43) Date of publication of application: **02.11.2022**
(21) Application number: 20904939.4
(22) Date of filing: 24.12.2020
(51) Int. Cl.: G06F 8/65

(54) **CLOUD OPERATING SYSTEM MANAGEMENT METHOD AND APPARATUS, SERVER, MANAGEMENT SYSTEM, AND MEDIUM**

(30) Priority: 24.12.2019 CN 201911351396
(71) Applicant: ZTE Corporation, Shenzhen, Guangdong 518057 (CN)
(72) Inventor: ZHAO, Kai, Shenzhen, Guangdong 518057 (CN)
(74) Representative: Deambrogi, Edgardo
(86) International application number: PCT/CN2020/138976
(87) International publication number: WO 2021/129733

(57) **Abstract**

Embodiments of the present disclosure provide a management method and apparatus for a cloud operating system, a server, a management system, and a medium. The method includes: updating cloud service software of a node in the cloud operating system according to a version change instruction, wherein the node includes a computing node; querying service states of virtual machines deployed in the computing node; in a case where there is a running virtual machine, whose service state is a running state, among the virtual machines deployed in the computing node, performing service switching or virtual machine transfer according to a deployment type of the running virtual machine; and restarting the computing node when the service state of the running virtual machine is an idle state or a standby state.

## Description

### Cross-Reference to Related Application

The present disclosure claims priority to Chinese Application No. CN201911351396.3, filed before the China National Intellectual Property Administration (CNIPA) on December 24, 2019, and entitled "Management Method and Apparatus for Cloud Operating System, Server, Management System, and Medium", the entire contents of which are herein incorporated by reference.

### Technical Field

The present disclosure relates to cloud technology, for example, to a management method and apparatus for a cloud operating system, a server, a management system, and a medium.

### Background

Cloud computing is to centrally deploy computing services (virtual machines) and cloud disks of users on hardware servers and magnetic disk arrays by means of a virtualization technology, such that the resource utilization efficiency can be greatly improved. A cloud operating system is used for controlling and managing a server of computing nodes, so as to guarantee the reliability of computing resources and storage resources used by a virtual machine, thereby providing computing services for users online. In actual operation, it is necessary to update software versions of Virtualized Infrastructure Manager (VIM) and the computing node in the cloud operating system, including upgrade or rollback of the software versions. An offline upgrade mode is usually utilized, that is, in the update process, all virtual machines in a cloud resource pool are shut down, and the virtual machines are restarted after the update is completed, resulting in interruption of services. In some embodiments, it is possible to temporarily process the services by means of disaster recovery resource pools, but large-scale cross-resource pool operations are required, which requires a sufficient network bandwidth between the resource pools and enough computing nodes and storage nodes to be reserved for carrying the virtual machines, such that the resource cost is higher, and the processing process is complex. There are also some methods to assist in completing version update by means of separate network entities, but in most application scenarios, there is no similar network entity, and the processing modes and configuration partitions of different suppliers or different types of services are inconsistent, thus unified processing cannot be performed, resulting in lower efficiency of version update or system management.

### Summary

Embodiments of the present disclosure provide a management method and apparatus for a cloud operating system, a server, a management system, and a medium.

The embodiments of the present disclosure provide a management method for a cloud operating system, including:
updating cloud service software of a node in the cloud operating system according to a version change instruction, wherein the node includes a computing node;
querying service states of virtual machines deployed in the computing node;
in a case where there is a running virtual machine, whose service state is a running state, among the virtual machines deployed in the computing node, performing service switching or virtual machine transfer according to a deployment type of the running virtual machine; and
restarting the computing node when the service state of the running virtual machine is an idle state or a standby state.

The embodiments of the present disclosure further provide a management apparatus for a cloud operating system, including:
an update module, configured to update cloud service software of a node in the cloud operating system according to a version change instruction, wherein the node includes a computing node;
a query module, configured to query service states of virtual machines deployed in the computing node;
a service processing module, configured to, in a case where there is a running virtual machine, whose service state is a running state, among the virtual machines deployed in the computing node, perform service switching or virtual machine transfer according to a deployment type of the running virtual machine; and
a restart module, configured to restart the computing node when the service state of the running virtual machine is an idle state or a standby state.

The embodiments of the present disclosure further provide a server, including:
one or more processors; and
a storage device for storing one or more programs;
wherein when the one or more programs are executed by the one or more processors, the one or more processors implement the above management method for the cloud operating system.

The embodiments of the present disclosure further provide a management system, including: a node of a cloud operating system and the above server, wherein
the node of the cloud operating system is used for deploying or scheduling virtual machines; and
the server is used for performing life cycle management on the node of the cloud operating system.

The embodiments of the present disclosure further provide a computer-readable storage medium, wherein a computer program is stored on the computer-readable storage medium, and when executed by a processor, the program implements the above management method for the cloud operating system.

### Brief Description of the Drawings

Fig. 1 is a flowchart of a management method for a cloud operating system according to an embodiment;
Fig. 2 is a flowchart of restarting a computing node according to an embodiment;
Fig. 3 is a flowchart of updating cloud service software according to an embodiment;
Fig. 4 is a schematic diagram of deploying a core component and agent software in a virtual machine or container according to an embodiment;
Fig. 5 is a flowchart of updating cloud service software according to another embodiment;
Fig. 6 is a schematic structural diagram of a management apparatus for a cloud operating system according to an embodiment;
Fig. 7 is a schematic diagram of a hardware structure of a server according to an embodiment;
Fig. 8 is a schematic structural diagram of a cloud operating system according to an embodiment; and
Fig. 9 is a schematic diagram of implementation of a management system according to an embodiment.

### Detailed Description

The present disclosure will be described below in combination with the drawings and embodiments. It can be understood that the exemplary embodiments described herein are only used for explaining the present disclosure, rather than limiting the present disclosure. It should be noted that, the embodiments in the present disclosure and the features in the embodiments can be arbitrarily combined with each other under the condition of no conflict. In addition, it should be noted that, for the convenience of description, the drawings only show some, but not all, of the structures related to the embodiments of the present disclosure.

A cloud operating system can allocate virtual machines of designated specifications to users according to requirements. The specification parameters of a virtual machine include the number of CPUs, a memory size, a cloud disk capacity, etc. The cloud operating system needs to ensure the reliability of computing resources and storage resources used by the virtual machines, and ensure that virtual resources are always in an online service state. A computing node and a VIM node are mainly deployed in the cloud operating system. The computing node includes a server for providing virtual machines for users, a magnetic disk array for providing a storage cloud disk, a storage server, a physical switch for providing a virtual network, a virtual switch, a router, a firewall, and so on. The VIM node is mainly used for managing resource nodes of the users, including allocating computing resources, storage resources and network resources to the users, and reasonably scheduling these resources.

Cloud service components of the cloud operating system generally include an identity authentication component, a computing management component, a storage management component, a network management component and some other functional components. Core processes of the above components are deployed on the VIM node. A cloud service component agent process is deployed on the computing node for collecting resource information, reporting configuration information of the computing node to a core service process of the VIM node, and performing performance statistics and alarms on the computing node, as well as creating a virtual network, a virtual storage, a virtual machine and the like on the computing node according to the instruction of the core service process of the VIM node, so as to realize the life cycle management of the virtual machine.

In actual operation, it is necessary to update the version of cloud service software of the node in the cloud operating system, such as the VIM node and the computing node. An offline update mode will lead to interruption of services, and thus affecting the normal use of the system. An online update mode in the related art requires a cross-pool operation, which consumes a higher resource cost and has a complex processing process, or requires the assistance of a separate network entity to complete the version update. However, in most application scenarios, there is no similar network entity, and the processing modes and configuration partitions of different suppliers or different types of services are inconsistent, thus unified processing cannot be performed, resulting in lower efficiency of version update or system management.

The embodiments of the present disclosure provide a management method for a cloud operating system, which is applied to a server that performs life cycle management on the cloud operating system. In a version update process of a node in the cloud operating system, it is unnecessary to consume resources other than the computing node, such that the resource cost is reduced, and the computing node is restarted without interrupting the service, thereby improving the efficiency of version update and system management.

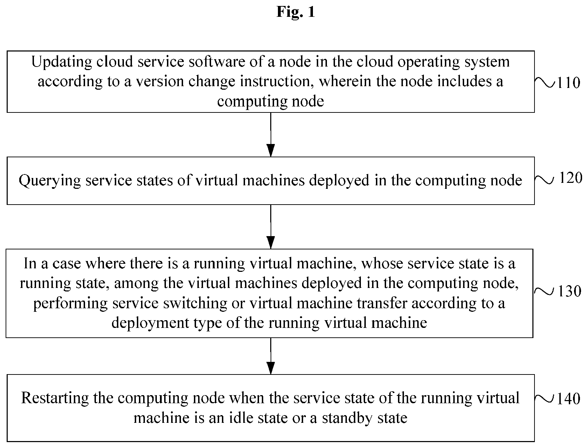

Fig. 1 is a flowchart of a management method for a cloud operating system according to an embodiment. As shown in Fig. 1, the method provided in the present embodiment includes operations 110-140.

In operation 110, cloud service software of a node in the cloud operating system is updated according to a version change instruction, wherein the node includes a computing node.

In operation 120, service states of virtual machines deployed in the computing node are queried.

In operation 130, in a case where there is a running virtual machine, whose service state is a running state, among the virtual machines deployed in the computing node, service switching or virtual machine transfer is performed according to a deployment type of the running virtual machine.

In operation 140, the computing node is restarted when the service state of the running virtual machine is an idle state or a standby state.

In the present embodiment, the node of the cloud operating system mainly includes a VIM node and a computing node. The computing node may act as an agent of the VIM node. The management over the cloud operating system mainly refers to the update of the VIM node and the computing node. The update includes two parts, the first part is to update the cloud service software, including upgrade and rollback of the software version, the cloud service software is a management core of the cloud operating system, and this part of update involves the upgrade of management software and the restart of cloud service, but will not affect the service that is running in the virtual machine; and the second part is mainly to update an operating system and middleware, such as database middleware and communication middleware, of the computing node, and the computing node may need to be restarted during this process. For the computing node to be restarted, the restart is allowed only when the service states of the deployed virtual machines are all idle states. In a case where there is a running virtual machine among the virtual machines deployed in the computing node, that is, a virtual machine whose service state is a running state, it is necessary to perform service switching or virtual machine transfer on the running virtual machine. The computing node is restarted when it is guaranteed that the service states of the virtual machines deployed in the computing node are an idle state or standby state, thereby avoiding crash of the virtual machine when the computing node is restarted, and thus guaranteeing the reliability of service.

In the management method for the cloud operating system provided in the present embodiment, a server may directly interact, through the VIM node, with the virtual machine carried by the computing node, such that the interaction process is simple, the number of interactions is small, a large number of partition calculations are not required, and no other entities are required, therefore the resource cost is reduced. In the telecommunications or Internet Technology (IT) field, the computing node is restarted without interrupting the service, such that the normal operation of the service of the virtual machine is not affected, and online upgrade can be realized. In the field of desktop cloud application in the IT field, the impact on the application of the virtual machine can be minimized, and the update speed and efficiency can be improved.

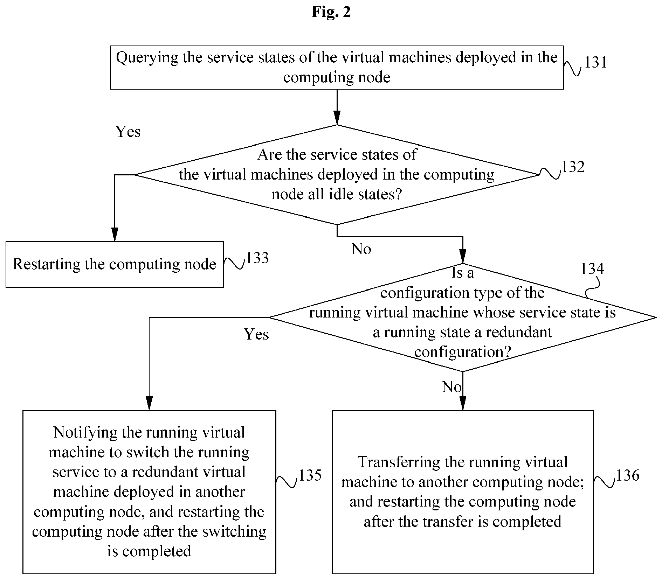

Fig. 2 is a flowchart of restarting a computing node according to an embodiment. In the present embodiment, restarting the computing node mainly refers to the second part of the management over the cloud operating system, and involves restarting the computing node. As shown in Fig. 2, the process of restarting the computing node includes operations 131-136.

In operation 131, the service states of the virtual machines deployed in the computing node are queried.

In operation 132, it is determined whether the service states of the virtual machines deployed in the computing node are all idle states.

In operation 133, the computing node is restarted.

In operation 134, it is determined whether a configuration type of a running virtual machine whose service state is a running state is redundant configuration.

In operation 135, the running virtual machine is notified to switch a running service to a redundant virtual machine deployed in another computing node, and the computing node is restarted after the switching is completed.

In operation 136, the running virtual machine is transferred to another computing node, and the computing node is restarted after the transfer is completed.

In the present embodiment, in a case where the service states of the virtual machines deployed in the computing node are all idle states, the computing node can be restarted directly. For a running virtual machine, that is, a virtual machine that is running a service, if the configuration type of this running virtual machine is a virtual machine with redundant configuration (active/standby configuration), for example, in high-availability scenarios such as telecommunications, the virtual machines may have 1:1 redundant configuration, 1+1 redundant configuration, or N+M redundant configuration, and so on, these virtual machines with the redundant configuration are deployed in an anti-affinity mode, that is, the virtual machines with the redundant configuration are used for processing the same type of service, but are not deployed on the same computing node, in this case, before the computing node is restarted, the running service in the running virtual machine may be switched to one or more corresponding redundant virtual machines deployed on one or more other computing nodes, so that the running of the service can continue, and the computing node is restarted after the switching is completed. In a case where the configuration type of this running virtual machine is non-redundant configuration, the running virtual machine is transferred from the computing node to another computing node, for example, to a computing node that has been updated, so as to avoid repeated transfer between the computing nodes. Herein, the adopted transfer mode may be cold transfer or hot transfer. In a case where the virtual machine is configured with high availability (for example, 1:1 redundancy protection, 1+1 redundancy protection, or N+M redundancy protection), the management method in the present embodiment can ensure the normal operation of the service on the running virtual machine, thereby avoiding service interruption caused by crash, and realizing the online upgrade of the cloud operating system.

In the process of managing the cloud operating system and restarting the computing node in the above embodiment, the VIM node directly communicates with the computing node to notify the running virtual machine in the computing node to perform service switching, so that all virtual machines in the computing node are set as standby virtual machines, and the computing node is restarted on this basis. By performing a virtual machine transfer operation on a running virtual machine without active/standby configuration, it can be ensured that the service states of the virtual machines deployed in the computing node are all idle states or standby states, and then the computing node is restarted, so that the impact on the service of the virtual machine is minimized.

In an embodiment, the node further includes a VIM node. The operation that the cloud service software of the node in the cloud operating system is updated according to the version change instruction includes the following operations. Upon receiving the version change instruction, a software package of a target version that passes verification is uploaded to the VIM node and the computing node. A backup database and configuration item is converted into a database and configuration item of the target version. The database and configuration item of the target version is imported into the VIM node and the computing node. A cloud service of the computing node is restarted.

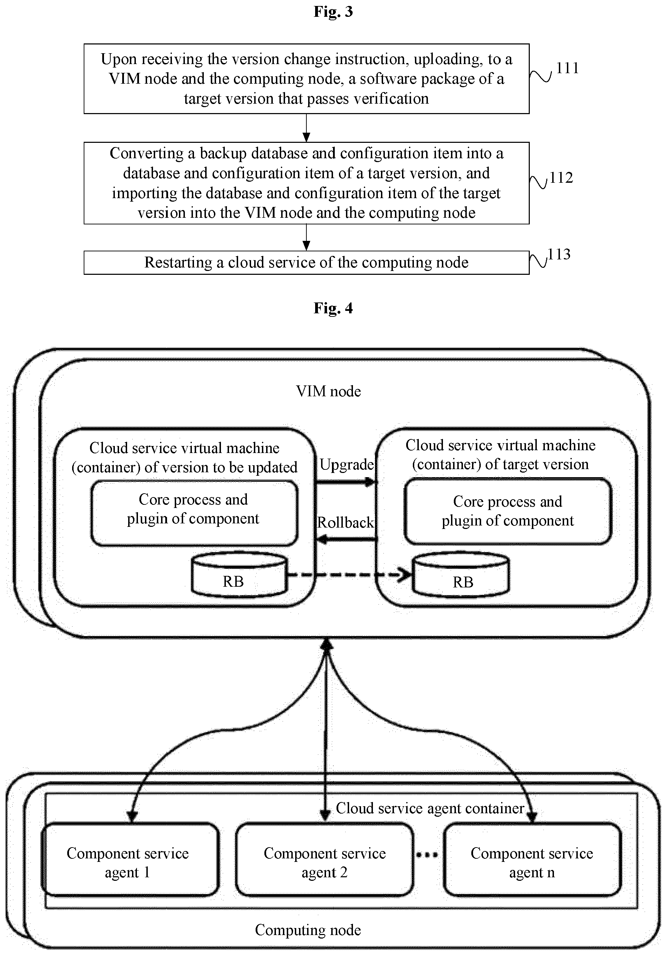

Fig. 3 is a flowchart of updating cloud service software according to an embodiment. In the present embodiment, updating the cloud service software mainly refers to the first part of the management over the cloud operating system, which involves the upgrade of the software version, shutdown and restart of the cloud service, and the like, but does not affect the running service in the virtual machine. As shown in Fig. 3, the process of updating the cloud service software includes operations 111-113.

In operation 111, upon receiving the version change instruction, a software package of a target version that passes verification is uploaded to the VIM node and the computing node.

In operation 112, a backup database and configuration item are converted into a database and configuration item of the target version, and the database and configuration item of the target version are imported into the VIM node and the computing node.

In operation 113, a cloud service of the computing node is restarted.

In the present embodiment, the server performs validity verification and integrity verification on the target version to be upgraded or rolled back, for example, verifies the target version according to a HASH algorithm or a signature algorithm. Only a software module or software version that passes the verification is allowed to be imported into the VIM node and the computing node of the cloud operating system, and after the software package that passes the verification is uploaded to the VIM node and the computing node of the cloud operating system, a cloud service of the computing node is restarted, thereby ensuring the security and reliability of software update of the cloud service.

The complete update process of the cloud operating system is described below, which specifically includes the following operations.
1) Databases and configuration files of the VIM node and the computing node in the cloud operating system are backed up for use when the cloud service software is upgraded or rolled back.
2) The cloud service software of the VIM node and the computing node in the cloud operating system is updated, for example, the software package of the target version is uploaded, the converted database and configuration file corresponding to the target version are imported, and the like. If the computing node needs to be restarted, 3) to 8) are executed; and if the computing node does not need to be restarted, 9) is executed.
3) All computing nodes are queried through the VIM node, and the computing node in which the service states of the virtual machines are all idle states (there is no running virtual machine on the computing node) is directly restarted.
4) For a computing node with a running virtual machine, if the running virtual machine has redundant configuration, the running virtual machine is notified, through a communication channel between the computing node and the running virtual machine, to switch the running service to a redundant virtual machine deployed in another computing node.
5) The running virtual machine receives a switching instruction in 4) and switches the service.
6) The service state of the running virtual machine is queried through the communication channel between the computing node and the virtual machine, it is determined whether service switching is completed, and if so, the running virtual machine has been switched to a standby virtual machine (idle state); and the running virtual machine transmits the service state or active/standby state of the virtual machine to the server through the communication channel.
7) When the running virtual machine is switched to the standby virtual machine (idle state), the computing node is restarted.
8) For the computing node with the running virtual machine, if the running virtual machine has a non-redundant configuration, the running virtual machine is transferred from the computing node to another computing node, wherein the transfer mode may be cold transfer or hot transfer, and the computing node is restarted after the transfer is completed.
9) The cloud service software is updated. In this process, the cloud service may be paused at first (the service in the virtual machine can run normally), after the update of the cloud service software is completed, the backup database and configuration file in 1) are converted into the database and configuration file of the target version, the database and configuration item of the target version are imported into the VIM node and computing node of the target version of the cloud operating system, and the cloud service is restarted. The target version may be a software version that is higher or lower than the original version, so as to realize the upgrade or rollback of the version of the cloud service software.

The update of the entire cloud operating system is completed by 1) to 9). It should be noted that, one VIM node may correspond to a plurality of computing nodes. For all computing nodes corresponding to each VIM node, the method completes the update of the service software and the restarting operation of the computing nodes.

In an embodiment, when a host operating system of each node is upgraded, small-batch upgrade is performed at first, and large-scale upgrade is performed after no error is detected, thereby avoiding the rollback of the operating system as much as possible. In the present embodiment, when the cloud operating system is rolled back, it is possible to only consider the rollback of the cloud service software (the rollback of the first part of the management over the cloud operating system), and not consider the rollback of the operating system (the rollback of the second part of the management over the cloud operating system). The rollback process of the cloud service software includes the following operations.
a) The database and configuration file of a lower version that is backed up during upgrade are acquired.
b) The cloud service is paused, a synchronization function between active and standby databases is disabled, and the cloud service software of the VIM node and the computing node is rolled back.
c) The database and configuration file acquired in a) are imported into the rolled back cloud operating system.
d) The cloud service of the VIM node and the computing node is restarted.

In an embodiment, the node further includes a VIM node. The cloud service software includes a core component of the VIM node and VIM agent software of the computing node. The core component of the VIM node is deployed in a first container or a target virtual machine; and the agent software of the computing node is deployed in a second container.

In the present embodiment, the core component of the VIM node is deployed in the virtual machine or the container, and the agent software of the computing node is deployed in the container, so as to shorten the upgrade and rollback time of the cloud service software of the VIM node. "First" and "second" are only used for distinguishing the container corresponding to the VIM node from the container corresponding to the computing node. A plurality of first containers or target virtual machines can correspond to the VIM node, and are respectively used for deploying core components of different versions, and a plurality of second containers can also correspond to the computing node.

Fig. 4 is a schematic diagram of deploying a core component and agent software in a virtual machine or container according to an embodiment. As shown in Fig. 4, the core component of the VIM node is deployed in a virtual machine (or container), wherein a version to be updated corresponds to a virtual machine (or container), a target version corresponds to a virtual machine (or container), and a version number of the target version is higher than a version number of the version to be updated. The agent software of the computing node is deployed in a container. When the cloud service software of the VIM node is upgraded, a mirror image of the virtual machine (or container) of the target version is released, mirroring is a file storage form and a redundancy type, data on one magnetic disk has a completely identical copy on another magnetic disk, and on the basis of the uploaded mirror image, the version to be updated can be quickly upgraded to the target version by starting the virtual machine (or container) of the target version. When the cloud service software of the VIM node is rolled back, the target version can be quickly rolled back to the version to be updated by starting the virtual machine (or container) of the version to be updated.

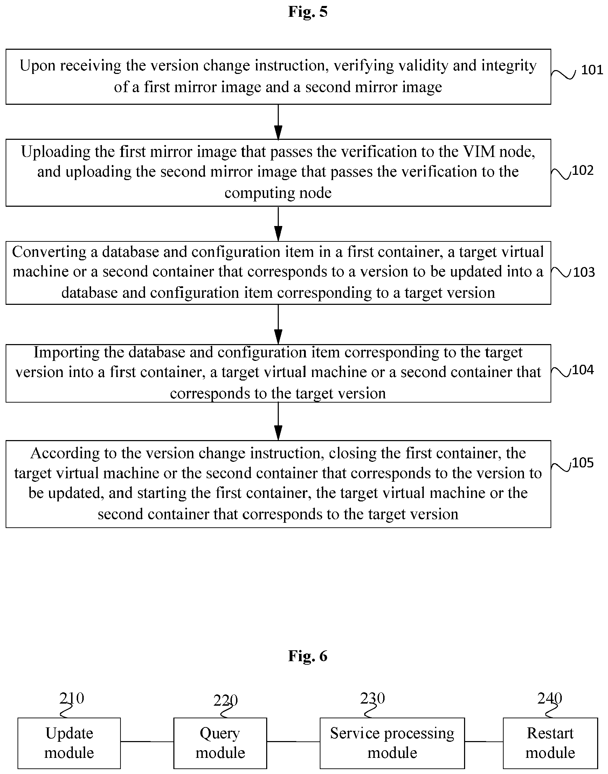

Fig. 5 is a flowchart of updating cloud service software according to another embodiment. In the present embodiment, a version number of the target version is higher than a version number of the version to be updated, the version change instruction is a version upgrade instruction, updating the cloud service software mainly refers to upgrading the cloud service software, and as shown in Fig. 5, the process of updating the cloud service software includes operations 101-105.

In operation 101, upon receiving the version change instruction, validity and integrity of a first mirror image and a second mirror image are verified.

In the present embodiment, the first mirror image is a mirror image of the first container or the target virtual machine in which the core component of the VIM node is deployed, and the second mirror image is a mirror image of the second container in which the agent software of the computing node is deployed.

In operation 102, the first mirror image that passes the verification is uploaded to the VIM node, and the second mirror image that passes the verification is uploaded to the computing node.

In operation 103, a database and configuration item in a first container, a target virtual machine or a second container that corresponds to a version to be updated are converted into a database and configuration item corresponding to a target version.

In operation 104, the database and configuration item corresponding to the target version are imported into a first container, a target virtual machine or a second container that corresponds to the target version.

In operation 105, according to the version change instruction, the first container, the target virtual machine or the second container that corresponds to the version to be updated are closed, and the first container, the target virtual machine or the second container that corresponds to the target version are started.

In an embodiment, updating the cloud service software of the VIM node and the computing node according to the version change instruction includes the following operations. According to the version change instruction, a first container, a target virtual machine or a second container that corresponds to a version to be updated are closed; and the first container, the target virtual machine or the second container that corresponds to the target version are started, wherein the version change instruction is a version rollback instruction, and a version number of the target version is higher than a version number of the version to be updated.

In the present embodiment, updating the cloud service software mainly refers to rolling back the cloud service software. In an upgrade process, the cloud operating system has deployed and retained a container mirror image or virtual machine mirror image of the version to be updated, and the database and configuration file during normal running are further stored in the virtual machine mirror image or the container mirror image. Therefore, the rollback process is simpler, the VIM node directly starts the virtual machine or container corresponding to the version to be updated, and closes the virtual machine or container of the target version, so as to roll back to the cloud service software of the previous lower version.

The method of the present embodiment provides the functions of online upgrade and rollback for the software of the cloud operating system. In the upgrade and rollback processes, it is ensured that the service virtual machine does not stop and the service is not interrupted, such that the impact on the service of the virtual machine is minimized, and fast online upgrade and rollback of the cloud operating system can be realized.

The embodiments of the present disclosure further provide a management apparatus for a cloud operating system. Fig. 6 is a schematic structural diagram of a management apparatus for a cloud operating system according to an embodiment. As shown in Fig. 6, the management apparatus for the cloud operating system includes: an update module 210, a query module 220, a service processing module 230 and a restart module 240.

The update module 210 is configured to update cloud service software of a node in the cloud operating system according to a version change instruction, wherein the node includes a computing node;
the query module 220 is configured to query service states of virtual machines deployed in the computing node;
the service processing module 230 is configured to, in a case where there is a running virtual machine, whose service state is a running state, among the virtual machines deployed in the computing node, perform service switching or virtual machine transfer according to a deployment type of the running virtual machine; and
the restart module 240 is configured to restart the computing node when the service state of the running virtual machine is an idle state or a standby state.

A signal sending apparatus in the present embodiment implements the version update of a VIM node and the computing node of the cloud operating system through the management apparatus for the cloud operating system, without consuming resources other than the computing node, thereby reducing the resource cost, and the computing node is restarted while ensuring that the service is not interrupted, thereby improving the efficiency of version update and system management.

In an embodiment, the service processing module 230 is specifically configured to:
in a case where the configuration type of the running virtual machine is redundant configuration, notify the running virtual machine to switch a running service to a redundant virtual machine deployed in another computing node, and restart the computing node after the switching is completed; and
in a case where the configuration type of the running virtual machine is non-redundant configuration, transfer the running virtual machine to another computing node, and restart the computing node after the transfer is completed.
In an embodiment, the node further includes a VIM node; and
the update module 210 is specifically configured to:
   upon receiving the version change instruction, upload, to the VIM node and the computing node, a software package of a target version that passes verification;
   convert a backup database and configuration item into a database and configuration item of the target version, and import the database and configuration item of the target version into the VIM node and the computing node; and
   restart a cloud service of the computing node.

In an embodiment, the node further includes a VIM node;
the cloud service software includes a core component of the VIM node and VIM agent software of the computing node;
the core component of the VIM node is deployed in a first container or a target virtual machine; and the agent software of the computing node is deployed in a second container.

In an embodiment, the update module 210 is specifically configured to:
verify validity and integrity of a first mirror image and a second mirror image, wherein the first mirror image is a mirror image of the first container or the target virtual machine, and the second mirror image is a mirror image of the second container;
upload the first mirror image that passes the verification to the VIM node, and upload the second mirror image that passes the verification to the computing node;
convert a database and configuration item in a first container, a target virtual machine or a second container that corresponds to a version to be updated into a database and configuration item corresponding to a target version, and import the database and configuration item corresponding to the target version into a first container, a target virtual machine or a second container that corresponds to the target version; and
according to the version change instruction, close the first container, the target virtual machine or the second container that corresponds to the version to be updated, and start the first container, the target virtual machine or the second container that corresponds to the target version,
wherein the version change instruction is a version upgrade instruction, and a version number of the target version is higher than a version number of the version to be updated.

In an embodiment, updating the cloud service software of the VIM node and the computing node according to the version change instruction includes:
according to the version change instruction, closing a first container, a target virtual machine or a second container that corresponds to a target version; and
starting a first container, a target virtual machine or a second container that corresponds to a version to be updated,
wherein the version change instruction is a version rollback instruction, and a version number of the target version is higher than a version number of the version to be updated.

The management apparatus for the cloud operating system provided in the present embodiment and the management method for the cloud operating system provided in the above embodiments are based on the same inventive concept. For technical details that are not described in detail in the present embodiment, reference can be made to any above embodiment, and the present embodiment has the same beneficial effects of implementing the management method for the cloud operating system.

The embodiments of the present disclosure further provide a server. The management method for the cloud operating system can be executed by the management apparatus for the cloud operating system. The management apparatus for the cloud operating system can be implemented by means of software and/or hardware and is integrated in the server. The server can be used as a management node of the cloud operating system to realize the function of LCM. In some application scenarios, a virtualized infrastructure manager function of the VIM node can also be deployed in the server at the same time. The server is used for performing life cycle management, version upgrade or rollback on the VIM node and the computing node in the cloud operating system.

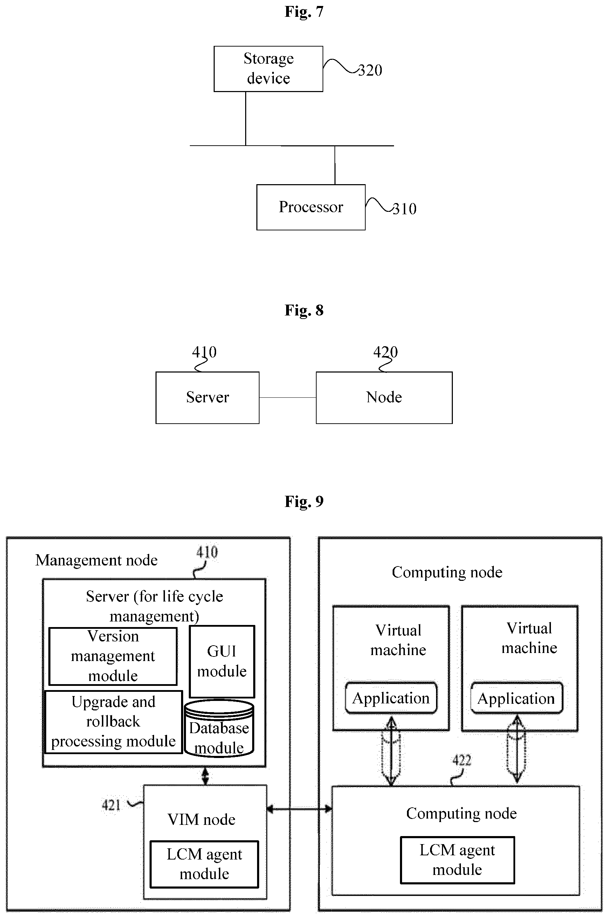

Fig. 7 is a schematic diagram of a hardware structure of a server according to an embodiment. As shown in Fig. 7, the server provided in the present embodiment includes: a processor 310 and a storage device 320. There can be one or more processors in the sensor, one processor 310 is taken as an example in Fig. 7, the processor 310 and the storage device 320 in the server can be connected by a bus or in other ways, and a bus connection is taken as an example in Fig. 7.

The one or more programs are executed by the one or more processors 310, so that the one or more processors implement the management method for the cloud operating system described in any above embodiment.

The storage device 320 in the server, as a computer-readable storage medium, can be used for storing one or more programs, and the programs can be software programs, computer-executable programs and modules, such as program instructions/modules (e.g., modules in the management apparatus for the cloud operating system as shown in Fig. 6, including: the update module 210, the query module 220, the service processing module and the restart module 240) corresponding to the management method for the cloud operating system in the embodiments of the present invention. By means of running the software programs, instructions and modules stored in the storage device 320, the processor 310 executes various functional applications and data processing of the server, that is, implements the management method for the cloud operating system in the above method embodiments.

The storage device 320 mainly includes a program storage area and a data storage area, wherein the program storage area can store application programs required by the operating system and at least one function; and the data storage area can store data (e.g., the cloud service software, service state and the like in the above embodiments) created according to the use of the server. In addition, the storage device 320 can include high-speed random access memory, and can also include a nonvolatile memory, such as at least one magnetic disk storage device, a flash memory device, or other nonvolatile solid-state storage devices. In some instances, the storage device 320 can further include memories that are arranged remotely relative to the processor 310, and these memories can be connected to the server by a network. Instances of the network include, but are not limited to, the Internet, an intranet, a local area network, a mobile communication network, and combinations thereof.

Moreover, when the one or more programs included in the above server are executed by the one or more processors 310, the following operations are implemented: updating cloud service software of a node in the cloud operating system according to a version change instruction, wherein the node includes a computing node; querying service states of virtual machines deployed in the computing node; in a case where there is a running virtual machine, whose service state is a running state, among the virtual machines deployed in the computing node, performing service switching or virtual machine transfer according to a deployment type of the running virtual machine; and restarting the computing node when the service state of the running virtual machine is an idle state or a standby state.

The server provided in the present embodiment and the management method for the cloud operating system provided in the above embodiments are based on the same inventive concept. For technical details that are not described in detail in the present embodiment, reference can be made to any above embodiment, and the present embodiment has the same beneficial effects of implementing the management method for the cloud operating system.

The embodiments of the present disclosure further provide a cloud operating system. Fig. 8 is a schematic structural diagram of a cloud operating system according to an embodiment. As shown in Fig. 8, the system includes: a node 420 of the cloud operating system and a server 410 as described in the above embodiment; the node 420 of the cloud operating system is used for deploying or scheduling virtual machines; and the server 410 is used for performing life cycle management on the node 420 of the cloud operating system.

In the present embodiment, the node 420 of the cloud operating system includes a VIM node and a computing node, the server 410 is used for executing the management method for the cloud operating system in any foregoing embodiment, and the method includes: updating cloud service software of the node 420 in the cloud operating system according to a version change instruction, wherein the node 420 of the cloud operating system includes a computing node; querying service states of virtual machines deployed in the computing node; in a case where there is a running virtual machine, whose service state is a running state, among the virtual machines deployed in the computing node, performing service switching or virtual machine transfer according to a deployment type of the running virtual machine; and restarting the computing node when the service state of the running virtual machine is an idle state or a standby state.

In the management system in the present embodiment, in the process of updating the versions of the VIM node and computing node in the cloud operating system, the server does not need to consume resources other than the computing node, thereby reducing the resource cost, and it is ensured that the computing node is restarted without interrupting the service by means of service switching or virtual machine transfer, thereby improving the efficiency of version update and system management.

In an embodiment, the server 410 includes: a Graphical User Interface (GUI) module, a version management module, an upgrade and rollback processing module and a database module; the GUI module is configured to provide a human-computer interaction interface; the version management module is used for verifying a target version and uploading, to the node 420 of the cloud operating system, a software package of the target version that passes the verification; the upgrade and rollback processing module is used for sending the version change instruction of the cloud service software to the node 420 of the cloud operating system, wherein the version change instruction is a version upgrade instruction or a version rollback instruction; and the database module is configured to store upgrade information or rollback information of the cloud service software, and store a system management log.

Fig. 9 is a schematic diagram of implementation of a management system according to an embodiment. As shown in Fig. 9, the node 420 of the cloud operating system includes a VIM node 421 and a computing node 422, both the server 410 and the VIM node 421 belong to management nodes in the system, the server 410 is used for performing life cycle management on the VIM node 421 and the computing node 422, and can also schedule the virtual machines of the computing node 422 through the VIM node 421, and the functions of various management nodes can be deployed in the same or different servers. In the server 410, the GUI module is configured to provide the human-computer interaction interface; and the version management module is mainly used for performing validity verification and integrity verification on a software version to be upgraded and rolled back, and uploading, to the VIM node 421 and the computing node 422, the software package that is updated to target software. The version management module can verify the target software according to a HASH algorithm or a signature algorithm. Only the software module or software version that passes the verification is allowed to be imported into the cloud operating system and uploaded to the VIM node 421 and the computing node 422. The upgrade and rollback processing module is mainly used for the upgrade and rollback processing of the software version. In the upgrade and rollback process, the upgrade and rollback processing module can send an instruction to the VIM node 421, so as to query the service states (active/standby states) of the virtual machines deployed in each computing node 422, and send a service switching instruction, a version upgrade instruction or a version rollback instruction, and the like; and the database module is mainly used for storing upgraded or rolled back software module information and log information, so as to check or retrospect the upgrade or rollback process.

In an embodiment, an LCM agent module can also be deployed in the VIM node 421 and the computing node 422, so as to control, according to an update instruction or a restart instruction of the server 410, to execute a management operation on the VIM node 421 and the computing node 422. The LCM agent module is specifically used for: reporting resource pool information to the server 410, wherein the resource pool information includes version information of the cloud service software; receiving the software package of the target version sent by the server module 410 and uploading the same to the VIM node 421 and the computing node 422; backing up a database and configuration item of a version to be updated; and converting the backup database and configuration item into a database and configuration item of the target version, and importing the database and configuration item of the target version into the VIM node 421 and the computing node 422. In the present embodiment, the server 410 can be deployed with at least one VIM node 421, a plurality of VIM nodes 421 can be provided, each VIM node 421 corresponds to one computing node 422, and the LCM agent module can be deployed on each node. The LCM agent module accepts and executes the instructions of the server 410, so as to realize information query, upgrade, rollback and the like of the cloud service software of the node of the cloud operating system, and in the case of upgrade failure of the cloud service software, the LCM agent module can also roll back the software package and import the configuration file and database of a previous lower version.

In an embodiment, a communication path between the server 410 and the virtual machine includes: a communication channel composed of the server 410, an application programming interface (Application Programming Interface, API) of the VIM node 421, the computing node 422 and the virtual machine; or, a communication channel composed of the server 410, the LCM agent module, the computing node 422 and the virtual machine.

In the present embodiment, before restarting the computing node 422, the server 410 needs to notify the virtual machines deployed in the computing node 422 to switch the service to other redundant virtual machines. In this process, it is necessary to query whether all virtual machines in the computing node 422 complete the service switching, the query is implemented by the communication channel between the computing node 422 and the virtual machine, the communication channel can be a network channel, can also be an Industry Standard Architecture (ISA) input-output channel or a serial port channel, and can also be a Qemu Guest Agent channel of a Kernel-based Virtual Machine. There can be various communication paths between the server 410 and the virtual machine. For example, the server 410 calls the API interface of the VIM node 421 to communicate with the virtual machine through the VIM agent via the communication channel; and as another example, the server 410 can directly communicate with the LCM agent module and communicate with the virtual machine through the LCM agent module via the communication channel.

The cloud operating system provided by the embodiment of the present disclosure and the management method for the cloud operating system provided in the above embodiments are based on the same inventive concept. For technical details that are not described in detail in the present embodiment, reference can be made to any above embodiment, and the present embodiment has the same beneficial effects of implementing the management method for the cloud operating system.

The embodiments of the present disclosure further provide a storage medium containing computer-executable instructions, wherein when executed by a computer processor, the computer-executable instructions are used for executing a management method for a cloud operating system.

By means of the above descriptions of the embodiments, those skilled in the art to which the present disclosure belongs can understand that, the present disclosure can be implemented by software and universal hardware, and can also be implemented by hardware. Based on this understanding, the technical solutions in the present disclosure can be embodied in the form of a software product, the computer software product can be stored in a computer-readable storage medium, such as a floppy disk of a computer, a Read-Only Memory (ROM), a Random Access Memory (RAM), a FLASH, a magnetic disk, an optical disk or the like, and include a plurality of instructions for enabling a computer device (can be a personal computer, a server, or a network device and the like) to execute the method in any embodiment of the present disclosure.

The above descriptions are merely exemplary embodiments of the present disclosure, and are not intended to limit the protection scope of the present disclosure.

The block diagrams of any logic flow in the drawings of the present disclosure can represent program operations, or can represent interconnected logic circuits, modules and functions, or can represent a combination of program operations and logic circuits, modules and functions. Computer programs can be stored on a memory. The memory can be of any type suitable for a local technical environment and can be implemented by using any suitable data storage technology, such as, but not limited to, a read only memory (ROM), a random access memory (RAM), optical memory apparatuses and systems (Digital Versatile Discs, DVD or CD discs) etc. The computer-readable medium can include a non-transitory storage medium. The data processor can be of any type suitable for the local technical environment, such as, but not limited to, a general-purpose computer, a special-purpose computer, a microprocessor, a digital signal processor (DSP), an application-specific integrated circuit (ASIC), a programmable logic device (FGPA) and a processor based on multi-core processor architecture.

By way of illustrative and nonrestrictive examples, a detailed description of exemplary embodiments of the present disclosure has been provided above. However, when considered in conjunction with the drawings and claims, various modifications and adjustments to the above embodiments will be apparent to those skilled in the art without departing from the scope of the present invention. Accordingly, a proper scope of the present invention will be determined according to the claims.

## Claims

1. A management method for a cloud operating system, comprising:
updating cloud service software of a node in the cloud operating system according to a version change instruction, wherein the node comprises a computing node;
querying service states of virtual machines deployed in the computing node;
in a case where there is a running virtual machine, whose service state is a running state, among the virtual machines deployed in the computing node, performing service switching or virtual machine transfer according to a deployment type of the running virtual machine; and
restarting the computing node when the service state of the running virtual machine is an idle state or a standby state.

2. The method according to claim 1, wherein performing service switching or virtual machine transfer according to the deployment type of the running virtual machine comprises:
in a case where the configuration type of the running virtual machine is redundant configuration, notifying the running virtual machine to switch a running service to a redundant virtual machine deployed in another computing node, and restarting the computing node after the switching is completed; and
in a case where the configuration type of the running virtual machine is non-redundant configuration, transferring the running virtual machine to another computing node, and restarting the computing node after the transfer is completed.

3. The method according to claim 1, wherein the node further comprises a Virtualized Infrastructure Manager (VIM) node; and
updating the cloud service software of the node in the cloud operating system according to the version change instruction comprises:
upon receiving the version change instruction, uploading, to the VIM node and the computing node, a software package of a target version that passes verification;
converting a backup database and configuration item into a database and configuration item of the target version, and importing the database and configuration item of the target version into the VIM node and the computing node; and
restarting a cloud service of the computing node.

4. The method according to claim 1, wherein the node further comprises a Virtualized Infrastructure Manager (VIM) node;
the cloud service software comprises a core component of the VIM node and VIM agent software of the computing node;
the core component of the VIM node is deployed in a first container or a target virtual machine; and the agent software of the computing node is deployed in a second container.

5. The method according to claim 4, wherein updating the cloud service software of the node in the cloud operating system according to the version change instruction comprises:
verifying validity and integrity of a first mirror image and a second mirror image, wherein the first mirror image is a mirror image of the first container or the target virtual machine, and the second mirror image is a mirror image of the second container;
uploading the first mirror image that passes the verification to the VIM node, and uploading the second mirror image that passes the verification to the computing node;
converting a database and configuration item in a first container, a target virtual machine or a second container that corresponds to a version to be updated into a database and configuration item corresponding to a target version, and importing the database and configuration item corresponding to the target version into a first container, a target virtual machine or a second container that corresponds to the target version; and
according to the version change instruction, closing the first container, the target virtual machine or the second container that corresponds to the version to be updated, and starting the first container, the target virtual machine or the second container that corresponds to the target version,
wherein the version change instruction is a version upgrade instruction, and a version number of the target version is higher than a version number of the version to be updated.

6. The method according to claim 4, wherein updating the cloud service software of the node in the cloud operating system according to the version change instruction comprises:
according to the version change instruction, closing a first container, a target virtual machine or a second container that corresponds to a target version; and
starting a first container, a target virtual machine or a second container that corresponds to a version to be updated,
wherein the version change instruction is a version rollback instruction, and a version number of the target version is higher than a version number of the version to be updated.

7. A management apparatus for a cloud operating system, comprising:
an update module, configured to update cloud service software of a node in the cloud operating system according to a version change instruction, wherein the node comprises a computing node;
a query module, configured to query service states of virtual machines deployed in the computing node;
a service processing module, configured to, in a case where there is a running virtual machine, whose service state is a running state, among the virtual machines deployed in the computing node, perform service switching or virtual machine transfer according to a deployment type of the running virtual machine; and
a restart module, configured to restart the computing node when the service state of the running virtual machine is an idle state or a standby state.

8. A server, comprising:
one or more processors; and
a storage device for storing one or more programs;
wherein when the one or more programs are executed by the one or more processors, the one or more processors implement the management method for the cloud operating system according to any of claims 1-6.

9. A management system, comprising: a node of a cloud operating system and the server according to claim 8, wherein
the node of the cloud operating system is used for deploying or scheduling virtual machines; and
the server is used for performing life cycle management on the node of the cloud operating system.

10. The system according to claim 9, wherein the server comprises: a Graphical User Interface (GUI) module, a version management module, an upgrade and rollback processing module and a database module;
the GUI module is configured to provide a human-computer interaction interface;
the version management module is configured to verify a target version, and upload, to the node, a software package of the target version that passes the verification;
the upgrade and rollback processing module is used for sending a version change instruction of cloud service software to the node, wherein the version change instruction is a version upgrade instruction or a version rollback instruction; and
the database module is configured to store upgrade information or rollback information of the cloud service software, and store a system management log.

11. A computer-readable storage medium, wherein a computer program is stored on the computer-readable storage medium, and when executed by a processor, the program implements the management method for the cloud operating system according to any of claims 1-6.
